Europäisches Patentamt

European Patent Office

Office européen des brevets

(19)

(11) Numéro de publication : **0 304 364 B1**

(12) **FASCICULE DE BREVET EUROPEEN**

---

(45) Date de publication du fascicule du brevet :
05.02.92 Bulletin 92/06

(21) Numéro de dépôt : 88401980.3

(22) Date de dépôt : 29.07.88

(51) Int. Cl.⁵ : **A01G 9/10**

---

(54) **Procédé, support et dispositif transporteur pour transporter simultanement un grand nombre de pots sur une surface de stockage horticole.**

---

(30) Priorité : 31.07.87 FR 8710906

(43) Date de publication de la demande :
22.02.89 Bulletin 89/08

(45) Mention de la délivrance du brevet :
05.02.92 Bulletin 92/06

(84) Etats contractants désignés :
**BE DE IT NL**

(56) Documents cités :
**DE-C- 3 625 674
FR-A- 2 137 326
US-A- 3 078 020
US-A- 4 003 185**

(73) Titulaire : **Thomas, Georges
Village le Carré Chambéry le Vieux
F-73000 Chambéry (FR)**

(72) Inventeur : **Thomas, Georges
Village le Carré Chambéry le Vieux
F-73000 Chambéry (FR)**

(74) Mandataire : **Derambure, Christian
BUGNION ASSOCIES 4 square Jean Moulin
F-73100 Aix les Bains (FR)**

---

Jouve, 18, rue Saint-Denis, 75001 PARIS

EP 0 304 364 B1

# Description

L'invention concerne le transport simultané d'un grand nombre pots après leur remplissage sur une surface de stockage notamment dans le domaine de l'horticulture.

Dans le domaine technique des pépinières d'élevage en pots, on procède au rempotage des plants dans les pots qui vont assurer leur croissance jusqu'à la vente. Les plants rempotés sont donc ultérieurement stockés sur des surfaces de stockage horticoles à l'air libre où ils peuvent croître et sont exposés éventuellement pour la vente. Le rempotage est généralement effectué dans un lieu éloigné de la surface de culture et sous abri par des machines rempoteuses alimentées en plants, en terre, et en pots. Les pots peuvent être de toute nature et peuvent être constitués de simples sachets en matière plastique. Le problème qui se pose est donc de transporter les pots sans les endommager depuis la rempoteuse sur la surface de culture et d'agencer les pots correctement en bandes et par catégories ou espèces sur la surface de culture.

Par ailleurs, le même problème se pose pour transporter les pots depuis la surface de culture à l'air libre jusqu'à une surface généralement abritée de préparation et de chargement des commandes en vue de la livraison des pots aux clients. Dans toute la suite, on désignera par "surface de stockage" la surface de destination des pots après leur transport, c'est-à-dire soit la surface de culture, soit la surface de préparation et de chargement des commandes.

La solution la plus simple et la plus commune donnée à ce problème consiste à emplir une remorque à la main des pots sortant de la rempoteuse ou disposés sur la surface de culture, transporter la remorque jusqu'à la surface de stockage et la vider sur la surface de stockage à la main, pot par pot ou par deux ou trois selon le volume et poids des pots. Cette solution est extrêmement onéreuse en personnel. De plus, le déchargement de la remorque est une opération pénible lorsque les conditions climatiques sont mauvaises et nécessite certaines précautions pour ne pas endommager les pots et les ranger correctement. Enfin, les opérations de rempotage, et donc de transport sur la surface de culture, doivent être effectuées dans un intervalle de temps déterminé et assez court, au printemps, à partir de la réception des jeunes plants. On sait par exemple qu'un plant à racines nues doit être rempoté sous dix jours, et que le rempotage de tels plants doit être effectué en un mois environ, au printemps pour éviter les arrêts végétatifs et obtenir les meilleurs résultats. Pour résoudre ce dernier problème, on a pensé dans les grandes pépinières à utiliser des trains de remorques qui limitent le temps de transport à l'unité mais qui ne résolvent pas le problème de la mise en place sur la surface de stockage.

Il est donc nécessaire d'automatiser les opérations de transport et de déchargement sur la surface de stockage. En ce qui concerne la surface de culture, il a déjà été proposé d'utiliser une machine rempoteuse déplaçable alimentée en électricité par un groupe électrogène, et une bande transporteuse. La surface de culture étant constituée d'allées d'accès et de plates-bandes de stockage disposées perpendiculairement et de part et d'autre des allées, la rempoteuse est placée dans l'allée en regard d'une plate-bande à remplir et la bande transporteuse s'étend perpendiculairement à l'allée dans une plate-bande libre de la surface de stockage jouxtant la plate-bande à remplir. Une telle solution n'est pas satisfaisante car elle est trop sophistiquée et coûteuse. De plus, le déplacement et l'utilisation de la machine rempoteuse, du groupe électrogène et de la bande transporteuse sur le terrain de la surface de culture sont difficiles voire dangereux, et les machines s'usent rapidement. De plus et surtout, l'allée d'accès est obstruée par la machine rempoteuse (ce qui gêne en particulier le transport vers la surface de préparation des commandes), l'approvisionnement de la machine rempoteuse en terre, pots et plants est difficile, et l'utilisation de ces machines nécessite trop de personnel. Par ailleurs, le rempotage doit dans ce cas s'effectuer à l'air libre, ce qui n'est pas souhaitable en cas d'intempéries. De plus, il est difficile, voire impossible, de remplir une plate-bande de stockage si celles qui la jouxtent sont elles-mêmes pleines.

Par ailleurs, on connaît déjà de la demande de brevet français 2409692 un procédé et un dispositif pour cultiver des plants et les transporter sur le lieu de plantation utilisant un cadre de support à rainures de maintien pour des plaques de culture et un cadre de transport. Cependant, le cadre de transport est transporté manuellement et surtout, les plaques de culture doivent être déchargées une à une manuellement en vue de la plantation. Ce procédé et ce dispositif ne sont pas applicables à l'élevage de plants en pots, et ne fournissent donc pas une solution satisfaisante aux problèmes mentionnés ci-dessus.

On connaît également du brevet européen 0033550 un plateau de support pour pots horticoles présentant des évidements facilitant le déchargement manuel des pots un à un. Pour les mêmes raisons que celui du brevet FR 2409692, un tel plateau ne fournit pas de solution efficace aux problèmes mentionnés ci-dessus. Il en va de même du support décrit dans la demande de brevet français 2559998 qui est constitué d'un treillis de fils et qui doit être déchargé manuellement pot par pot, ou qui est laissé sur la surface de culture. Le support permet essentiellement de lutter contre le vent en maintenant les pots. Mais dans ce cas, il faut prévoir un treillis par plate-bande, ce qui est trop onéreux. De plus, les manoeuvres de transport et de mise en place sur la plate-bande sont difficiles et réclament trop de personnel.

L'utilisation de ces différents dispositifs pour transporter et mettre en place les pots après rempotage n'offre pas d'avantage significatif par rapport à celle d'une simple remorque puisqu'elle nécessite autant d'opérations de manutention, et dans les mêmes conditions.

On connaît par ailleurs, du brevet allemand DE 3625674 un dispositif transporteur supportant une palette réglable en hauteur par rapport à un châssis entre quatre montants verticaux, la palette étant chargée d'un faible nombre de rangées de pots et comportant des trappes articulées à ses cloisons de séparation permettant le déchargement simultané de tous les pots. Le dispositif transporteur encadre la palette, et doit être engagé sur la plate-bande avant le déchargement. De ce fait, il est en pratique impossible de réaliser un tel dispositif qui permette le transport simultané de tous les pots d'une plate-bande entière. Par ailleurs, la hauteur du châssis de ce dispositif transporteur doit être adaptée en fonction de celle des plants à transporter. Enfin, l'utilisation d'un tel dispositif est impossible ou délicate si les plates-bandes voisines de celle où les pots sont déchargés sont occupées.

L'invention vise donc à remédier aux inconvénients des procédés et dispositifs connus et a pour objet de diminuer le nombre des opérations de manutention nécessaires au transport et à la mise en place des pots, de diminuer le nombre de personnes nécessaires à ces opérations — notamment ne nécessite qu'une personne pour l'opération de déchargement —, d'augmenter la vitesse et la qualité d'exécution de ces opérations, de permettre leur exécution par tous les temps et en toute sécurité, et ce en nécessitant un investissement financier aussi faible que possible. Un autre objet de l'invention est de permettre le transport simultané de tous les pots d'une même plate-bande et leur déchargement par une personne automatiquement sur cette plate-bande. Un autre objet de l'invention est de proposer un dispositif transporteur adapté à toutes les hauteurs habituelles de plants. Un autre objet de l'invention est de proposer un procédé et un dispositif transporteur permettant le transport et le déchargement de tous les pots d'une plate-bande sans nécessiter l'engagement du dispositif transporteur dans la plate-bande, c'est-à-dire à partir de l'allée d'accès. Un autre objet de l'invention est de faciliter la gestion de la surface de stockage en autorisant des chargements du support à partir d'une plate-bande ou des déchargements sur une plate-bande dont les plates-bandes voisines sont occupées. Un autre objet de l'invention est de fournir un support et un dispositif transporteur simples et sûrs à utiliser dans la terre et par tous les temps dans les mêmes conditions qu'une machine agricole, robustes et de faible coût.

Pour ce faire, l'invention propose un procédé pour transporter simultanément un grand nombre de pots et les mettre en place sans autre manutention individuelle sur une surface de stockage dans lequel on dispose les pots sur un support transportable s'étendant horizontalement et comportant des moyens de déchargement groupé des pots verticalement vers le bas, puis on transporte et on place le support au-dessus et en regard d'une plate-bande de la surface de stockage de sorte que chaque pot est ainsi situé à la verticale de l'endroit où il doit être stocké, puis on décharge les pots du support en actionnant les moyens de déchargement, ce qui a pour effet de faire tomber verticalement les pots sur la surface de stockage, caractérisé en ce que l'on utilise un support dont les dimensions correspondent à celles de la plate-bande de la surface de stockage, en ce que l'on transporte le support vers la surface de stockage grâce à un dispositif transporteur, le support étant disposé pour s'étendre en longueur selon l'axe d'avancement du dispositif transporteur, en ce que l'on avance le dispositif transporteur dans une allée de la surface de stockage en regard d'une plate-bande de cette surface qui s'étend perpendiculairement à l'allée et en ce que l'on place le support au-dessus et en regard de cette plate-bande en le faisant pivoter de 90° environ dans un plan au moins sensiblement horizontal par rapport au dispositif transporteur en vue de placer le support au-dessus et en regard de la plate-bande pour décharger les pots. L'invention propose aussi un support permettant de transporter simultanément un grand nombre de pots et de les mettre en place sans autre manutention individuelle sur une surface de stockage du type comportant un châssis rectangulaire et des moyens de maintien des pots en place, des moyens de déchargement groupé verticalement vers le bas permettant de faire tomber les pots verticalement par groupe sur la surface de stockage sans manutention individuelle de ces pots, les différents moyens de déchargement groupé des différents pots étant liés mécaniquement entre eux de façon à pouvoir être actionnés par un dispositif commun d'actionnement, les moyens de maintien des pots permettant leur rangement en rangées, caractérisé en ce qu'il comporte un fond plan comportant des évidements formant trappes de passage des pots et constituant les moyens de déchargement groupé, le fond étant associé au châssis de façon à pouvoir coulisser par rapport à ce châssis dans une direction parallèle à son plan et à celui du châssis, notamment longitudinalement, entre deux positions : une position normale pour laquelle les évidements ne viennent pas en regard des pots qui reposent sur le fond, et une position de déchargement dans laquelle les évidements sont en regard des pots et permettent leur chute verticale à travers ces évidements, en ce qu'il comporte des traverses fixes de maintien associées rigidement au châssis rectangulaire parallèlement à un côté du châssis et à distance les unes des autres de sorte que les pots peuvent être disposés en rangées entre ces traverses, en ce que le fond est constitué de traverses de support des pots parallèles entre elles et aux traverses fixes de maintien, les traverses de support étant écartées horizontalement les unes des autres de façon à former entre elles les évidements permettant le passage des rangées de pots en position de déchargement, lorsque les évidements sont mis en regard des pots par translation horizontale du fond perpendiculairement aux traverses, et en ce que, en position normale du fond pour laquelle les pots reposent sur les traverses de support, la distance $d_3$ séparant chaque traverse de support de la traverse fixe de maintien sous laquelle elle vient coulisser en position de déchargement est différente d'une traverse de support à l'autre et varie progressivement d'un côté à l'autre du châssis de sorte qu'au cours du coulissement du fond de la position normale à la position de déchargement, les évidements viennent en regard des pots progressivement d'un côté à l'autre du châssis, les moyens de déchargement étant agencés pour permettre un déchargement groupé mais progressif des pots, rangée par rangée, en fonction de la course de déplacement du dispositif commun d'actionnement. L'invention propose enfin un dispositif transporteur d'un tel support, comportant un châssis supportant au moins un essieu à roues, des moyens d'accrochage rapide et amovible du support au dispositif transporteur, des moyens de réglage de la position du support par rapport au châssis, et des moyens de commande et d'actionnement des moyens de déchargement groupé des pots du support, caractérisé en ce que les moyens d'accrochage rapide et amovible du support au dispositif transporteur comportent un palonnier d'accrochage de support, ce palonnier étant lui-même suspendu au châssis par l'intermédiaire des moyens de réglage de la position du support par rapport au châssis, en ce que les moyens de réglage de la position du support par rapport au châssis sont constitués d'une potence d'orientation associée à un support de potence du châssis de façon à pouvoir pivoter autour d'un axe vertical, et d'une poutre de réglage de hauteur s'étendant horizontalement suspendue et parallèle au bras horizontal de la potence d'orientation de façon réglable en hauteur, le palonnier d'accrochage du support étant lui-même suspendu à la poutre de réglage de hauteur, et en ce que les moyens de réglage de la position du support par rapport au châssis permettent un pivotement du support d'une position dans laquelle il s'étend en longueur selon l'axe d'avancement du dispositif transporteur, à une position dans laquelle le support est sensiblement perpendiculaire à l'axe d'avancement du dispositif transporteur.

D'autres caractéristiques et avantages de l'invention apparaîtront à la lecture de la description suivante d'un de ses modes de réalisation, qui se réfère aux figures annexes dans lesquelles :

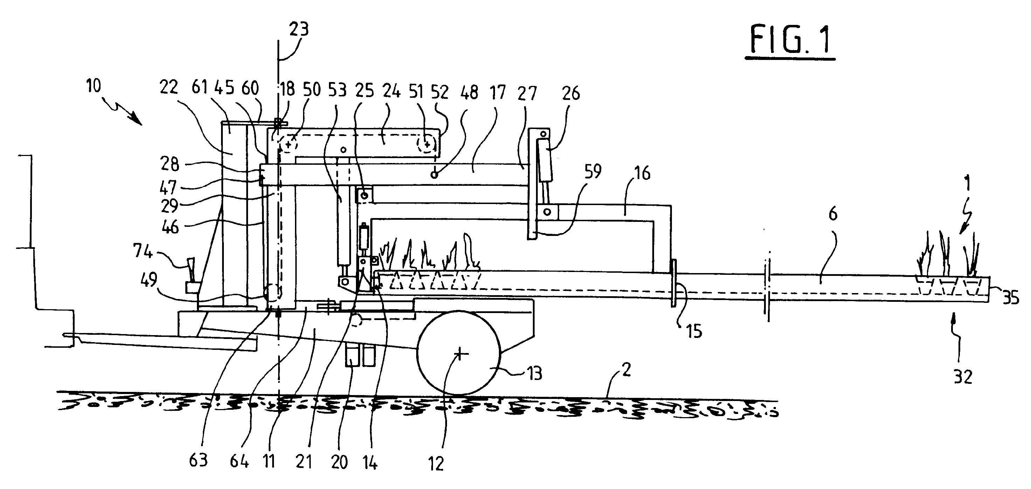

●La figure 1 est une vue schématique de côté d'un dispositif transporteur et du support associé selon l'invention.

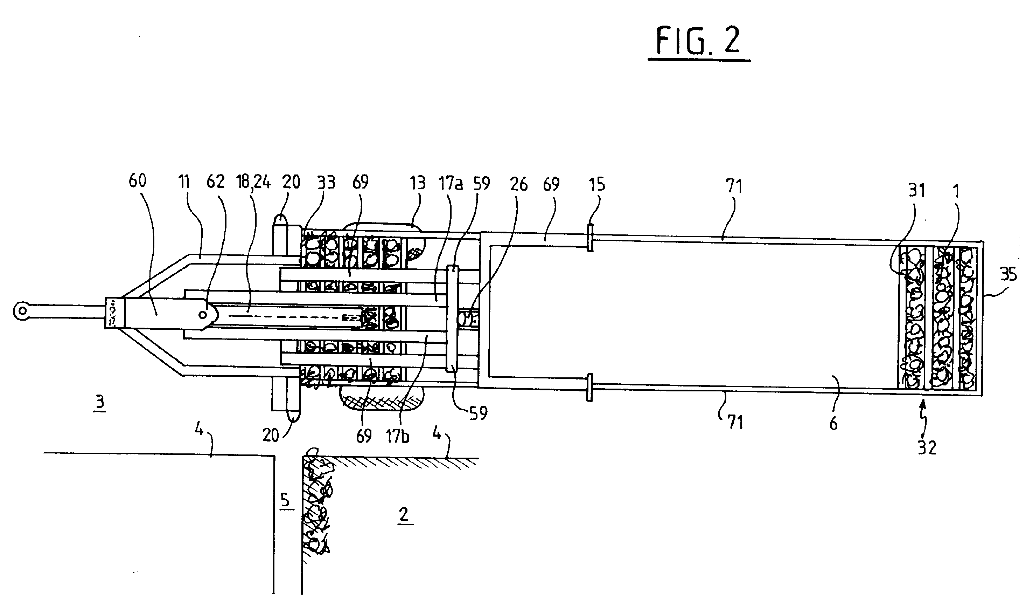

●La figure 2 est une vue schématique de dessus d'un dispositif transporteur en regard d'une plate-bande de stockage, et du support associé selon l'invention.

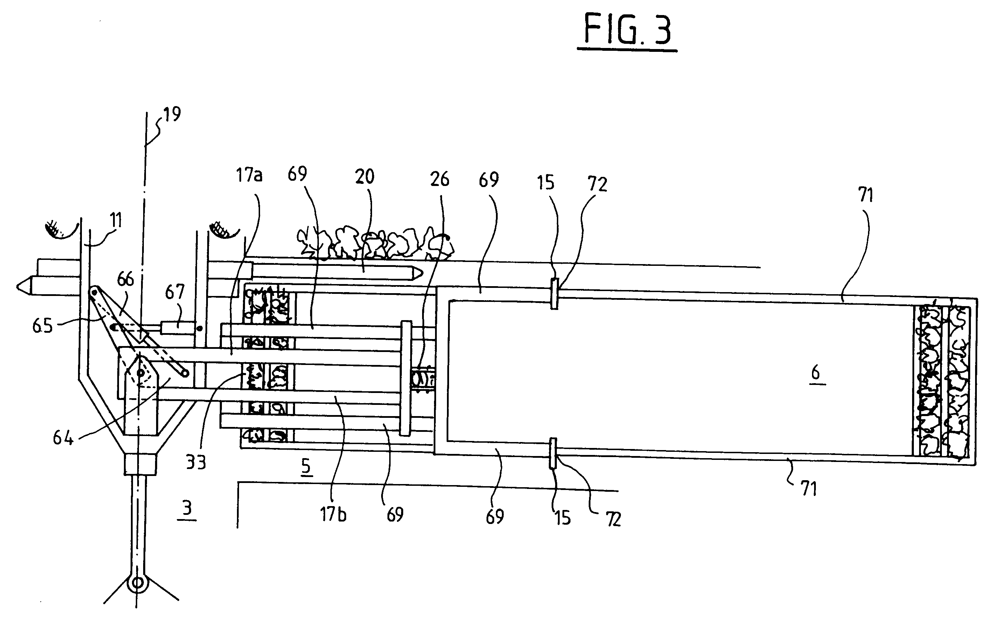

●La figure 3 est une vue schématique partielle de dessus d'un dispositif transporteur et du support associé selon l'invention, le support étant placé au-dessus et en regard de la plate-bande de stockage destinée à recevoir les pots.

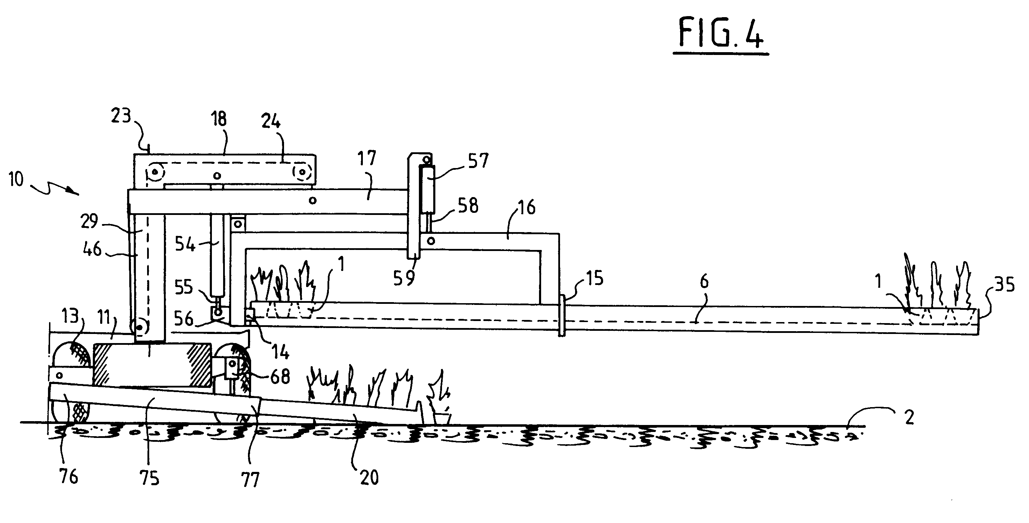

●La figure 4 est une vue schématique de derrière d'un dispositif transporteur selon l'invention, le support selon l'invention étant vu de profil et étant placé au-dessus et en regard de la plate-bande de stockage destinée à recevoir les pots.

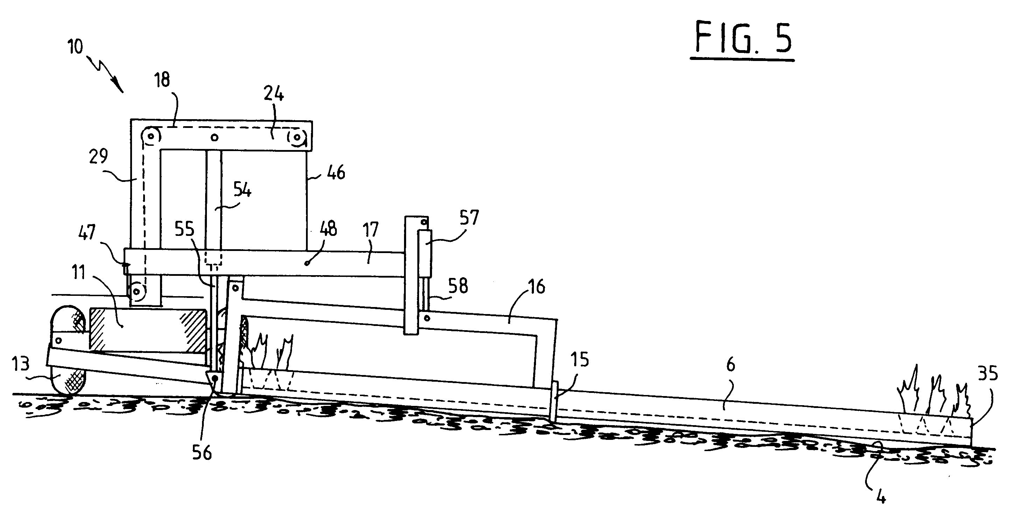

●La figure 5 est une vue similaire à la figure 4, le support étant placé le plus proche possible de la plate-bande de stockage afin de décharger les pots.

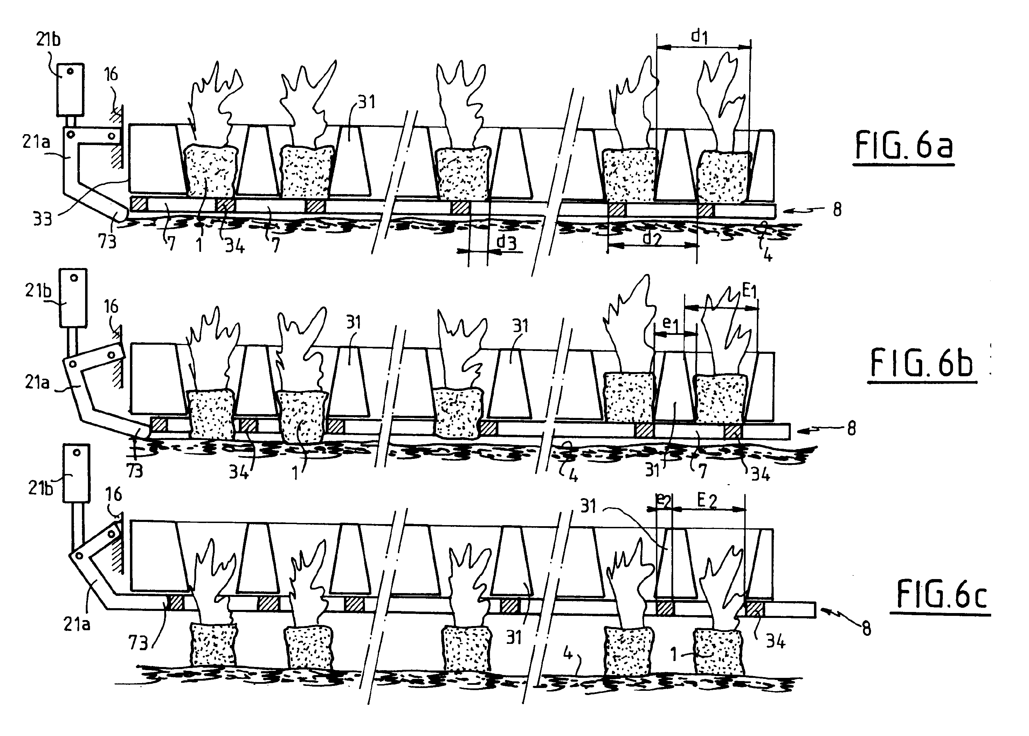

●Les figures 6a à 6c sont des coupes schématiques longitudinales partielles d'un support selon l'invention durant diverses étapes de déchargement des pots d'un procédé selon l'invention.

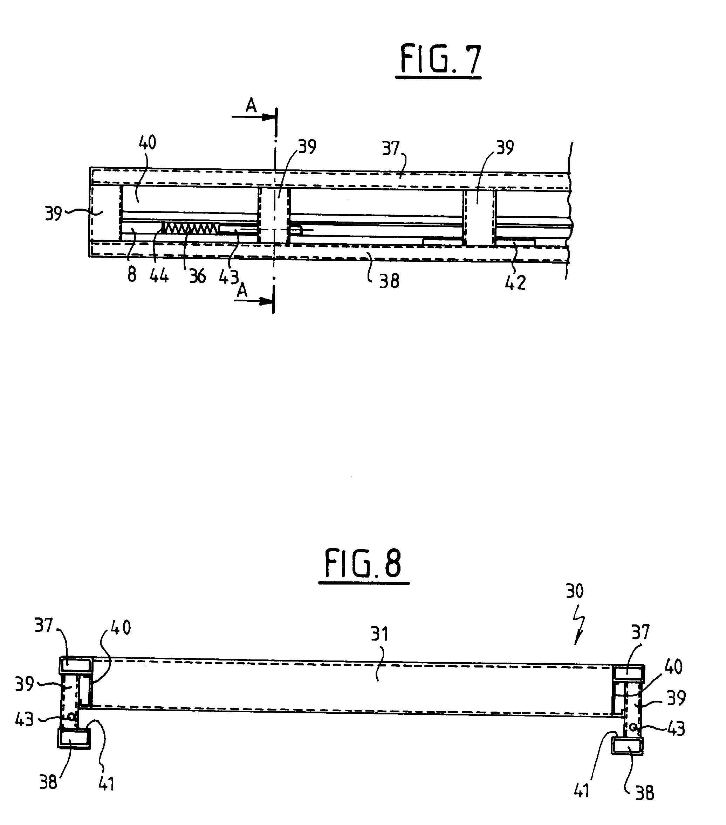

●La figure 7 est une vue de côté agrandie d'une extrémité du support selon l'invention.

●La figure 8 est une vue transversale selon la ligne AA de la figure 7, seul le châssis du support selon l'invention étant représenté.

L'invention concerne un procédé pour transporter simultanément un grand nombre de pots 1 et les mettre en place sans autre manipulation individuelle sur une surface 2 de stockage — notamment une surface horticole à l'air libre. Les pots horticoles 1 peuvent être souples ou rigides, en terre cuite ou en matière plastique et contiennent en général de jeunes plants rempotés. Ils sont donc de toutes façons assez délicats à manipuler et à transporter sans dommages pour eux-mêmes ou leur contenu. La surface 2 de stockage est constituée d'allées d'accès 3 et de plates-bandes de stockage 4 disposées perpendiculairement aux et de part et d'autre des allées d'accès 3. Les plates-bandes de stockage 4 ont généralement la forme d'un rectangle dont le grand côté est perpendiculaire à l'allée d'accès 3, et sont parallèles les unes aux autres. Des chemins d'accès et de séparation 5 sont prévus entre deux plates-bandes de stockage 4 voisines. Cet agencement de la surface de stockage 2 permet une exploitation maximum de l'aire de cette surface.

Dans un procédé selon l'invention, on dispose les pots 1 sur un support 6 transportable s'étendant au moins sensiblement horizontalement, dont les dimensions correspondent à celles d'une plate-bande 4 de la surface de stockage 2, le support 6 comportant des moyens 7, 8, 34 de déchargement groupé des pots 1 du support 6 verticalement vers le bas. Puis, on transporte et on place le support 6 au-dessus et en regard de la plate-bande 4 de la surface de stockage sur laquelle les pots 1 doivent être placés, de sorte que chaque pot 1 est situé à la verticale de l'endroit où il doit être stocké. On décharge ensuite les pots 1 du support 6 en actionnant les moyens 7, 8, 34 de déchargement, ce qui a pour effet de faire tomber verticalement les pots 1 sur la surface de stockage 2.

On transporte le support 6 vers la surface de stockage 2 grâce à un dispositif transporteur 10 selon l'invention, qui comporte un châssis 11 supportant au moins un essieu 12 à roues 13, des moyens 14, 15, 16 d'association du support 6 à ce dispositif transporteur 10, des moyens 17, 18 de réglage de la position du support 6 par rapport au châssis 11, des moyens de commande et d'actionnement 21 des moyens 7, 8, 34 de déchargement groupé des pots 1 du support 6, et différents moyens de commande et d'actionnement assurant son fonctionnement.

Le dispositif transporteur 10 peut être automobile ou non. Dans le mode de réalisation représenté, il est constitué d'une simple remorque tractée par un tracteur, et comporte un seul essieu 12 à deux roues 13.

Le support 6 est, comme les plates-bandes de stockage 4, de forme rectangulaire. Lors du transport du support 6 vers la surface de stockage 2 et dans les allées d'accès 3, c'est-à-dire depuis la machine rempoteuse jusqu'à la plate-bande 4 de stockage, le support 6 est disposé pour s'étendre en longueur selon l'axe d'avancement 19 du dispositif transporteur 10 (figures 1 et 2). On avance le dispositif transporteur 10 dans une allée d'accès 3 de la surface de stockage 2 en regard d'une plate-bande 4 de cette surface 2 qui s'étend perpendiculairement à l'allée 3, et on place le support 6 (en agissant sur les moyens 17, 18 de réglage de la position du support 6 par rapport au châssis 11) au-dessus et en regard de cette bande 4, en faisant pivoter ce support 6 de 90° environ par rapport au châssis 11 dans un plan au moins sensiblement horizontal, en vue de décharger les pots 1 du support 6.

Le dispositif transporteur 10 selon l'invention comporte des moyens 20 de positionnement par rapport à la plate-bande 4 de stockage sur laquelle on doit décharger le support 6, et des moyens 20 de stabilisation du dispositif transporteur 10 assurant la stabilité lors du pivotement à 90° du support 6 et lors du déchargement.

Le support 6 selon l'invention permettant de transporter simultanément un grand nombre de pots 1 et de les mettre en place sans autre manutention individuelle sur une surface 2 de stockage, est du type comportant un châssis 30 et des moyens 31 de maintien des pots 1 en place, et est caractérisé en ce qu'il comporte des moyens 7, 8, 34 de déchargement groupé verticalement vers le bas des pots 1, ces dits moyens 7, 8, 34 de déchargement permettant de faire tomber les pots 1 verticalement par groupes sur la surface de stockage 2 sans manutention individuelle de ces pots 1.

Les différents moyens 7, 8, 34 de déchargement groupé des différents pots 1 sont liés mécaniquement entre eux de façon à pouvoir être actionnés par un dispositif 21 commun d'actionnement. Les moyens 31 de maintien des pots 1 permettent leur rangement en rangées 32, et les moyens 7, 8, 34 de déchargement sont agencés pour permettre un déchargement groupé mais progressif des pots 1, rangée par rangée, en fonction de la course de déplacement du dispositif 21 commun d'actionnement.

Dans le mode de réalisation représenté de l'invention, le support 6 comporte un fond 8 plan rectangulaire, qui lui-même comporte des évidements 7 formant trappes de passage des pots 1, les dits évidements 7 constituant les moyens 7 de déchargement groupé des pots 1. Le fond 8 est associé au châssis 30 du support 6 de façon à pouvoir coulisser dans une direction parallèle à son plan et à celui du châssis, par exemple longitudinalement par rapport à ce châssis 30 entre deux positions : une position normale pour laquelle les évidements 7 ne viennent pas en regard des pots 1 qui reposent sur le fond 8, et une position de déchargement dans laquelle les évidements 7 sont en regard des pots 1 et permettent leur chute verticale à travers ces évidements 7 sur la surface de stockage 2. Le support 6 comporte des traverses fixes de maintien 31 associées rigidement au châssis rectangulaire 30 parallèlement à un côté 33 du châssis 30 — notamment parallèlement à un petit côté 33 de ce châssis 30 — et à distance les unes des autres de sorte que les pots 1 peuvent être disposés en rangées 32 entre ces traverses 31. Le fond 8 est constitué de traverses de support 34 des pots 1 parallèles entre elles et aux traverses fixes de maintien 31, ces traverses de support 34 étant écartées horizontalement les unes des autres de façon à former entre elles des évidements 7 permettant le passage des rangées 32 de pots 1 en position de déchargement, lorsque ces évidements 7 sont mis en regard des pots 1 par translation horizontale du fond 8 selon son plan et perpendiculairement aux traverses 31, 34 et au petit côté 33 du châssis 30 (figure 6a à 6c).

Selon l'invention, on décharge les pots 1 du support 6 progressivement en actionnant les moyens 7, 8, 34 de déchargement en commençant par les pots 1 qui sont disposés au voisinage d'un côté extrême 33 du support 6, et en terminant par les pots 1 qui sont disposés au voisinage du côté extrême opposé 35. On commence par décharger les pots 1 disposés au voisinage du petit côté 33 du support 6 le plus proche du dispositif transporteur 10, et on termine par ceux disposés au voisinage du petit côté opposé 35 éloigné du dispositif transporteur 10. Comme on l'a vu, le support 6 permet de disposer les pots 1 en rangées 32 parallèles au petit côté 33, 35 de ce support 6.

Dans un procédé selon l'invention, on décharge les pots 1 rangée par rangée, de sorte que ce déchargement est un déchargement groupé mais progressif.

Cette caractéristique est d'autant plus importante que le support 6 est long, car elle permet d'éviter un balancement du support 6 lors du déchargement, balancement qui risquerait de détériorer les pots 1 ou les plants qu'ils contiennent.

Afin de permettre ce déchargement groupé mais progressif, le support 6 selon l'invention est caractérisé en ce que, en position normale du fond 8 pour laquelle les pots 1 reposent sur les traverses de support 34, la distance $d_3$ séparant chaque traverse de support 34 de la traverse fixe de maintien 31 sous laquelle elle vient coulisser en position de déchargement, est différente d'une traverse de support 34 à l'autre et varie progressivement d'un côté 33 à l'autre 35 du châssis 30, de sorte qu'au cours du coulissement du fond 8 de la position normale à la position de déchargement les évidements 7 viennent en regard des pots 1 progressivement d'un côté 33 à l'autre 35 du châssis 30.

Pour réaliser un tel décalage, il est avantageux de prévoir que :

$d_1 \neq d_2$ et $e_2 < e_1$

et $(n - 1) \times |d_2 - d_1| < E_1$

ou $(n - 1) \times |d_2 - d_1| < E_2$

où

$d_2$ est la distance entre deux traverses de support 34 voisines, prise entre deux lignes ou bords similaires de ces traverses 34 (figure 6a),

$d_1$ est la distance entre deux traverses fixes de maintien 31 voisines, prise entre deux lignes ou bords similaires de ces traverses 31 (figure 6a),

$e_1$ est l'épaisseur d'une traverse fixe de maintien 31,

$E_1$ est l'espacement entre deux traverses de maintien 31 voisines ($E_1 = d_1 - e_1$), ou l'épaisseur d'une rangée 32 de pots 1,

$e_2$ est l'épaisseur d'une traverse de support 34,

$E_2$ est l'espacement entre deux traverses de support 34, ou l'épaisseur d'un évidement 7 ($E_2 = d_2 - e_2$),

n est le nombre d'évidement 7 et de rangées 32 de pots.

Les traverses fixes de maintien 31 et mobiles de support 34, et donc les rangées 32 de pots 1 sont parallèles aux petits côtés 33, 35 du châssis 30 rectangulaire du support 6.

Le support 6 comporte en outre avantageusement des moyens 36 de rappel du fond 8 en position normale pour laquelle chaque traverse de support 34 peut supporter une rangée 32 de pots 1. Le châssis 30 du support 6 est par exemple constitué de deux cadres rectangulaires périphériques 37, 38, de même dimension, placés l'un au-dessus de l'autre et à distance de l'un de l'autre grâce à des entretoises 39 régulièrement réparties à la périphérie entre deux cadres 37, 38. Deux poutres 40 longitudinales associés sous les grandes longerons longitudinaux du cadre supérieur 37 sont prévus. Les traverses fixes de maintien 31 sont associées rigidement à et perpendiculairement à ces poutres 40 et aux grands longerons longitudinaux du cadre supérieur 37. Le cadre inférieur 38 saille légèrement en retrait vers l'intérieur par rapport aux entretoises 39 de façon à former, avec les poutres longitudinales 40, des rampes 41 de soutien et de coulissement du fond mobile 8. Des patins 42 facilitant ce coulissement peuvent être prévus régulièrement répartis sur les rampes 41 (figures 7 et 8).

Les moyens 36 de rappel du fond 8 en position normale peuvent être constitués d'un ressort spiral 36 associé par une de ses extrémités à une tige de support 43, elle-même fixée sur une entretoise 39. La tige 43 et le ressort 36 s'étendent sensiblement horizontalement et longitudinalement. L'autre extrémité du ressort 36 coopère avec une saillie 44 du fond 8. De tels ressorts 36 peuvent être prévus sur chaque côté longitudinal du châssis 30.

Dans un dispositif transporteur 10 selon l'invention, les moyens 14, 15, 16 d'association du support 6 à ce dispositif transporteur 10 sont des moyens d'accrochage rapide et amovible. De la sorte, avec un même dispositif transporteur 10, on peut utiliser plusieurs supports 6. Le support 6 en cours de chargement à la sortie de la machine rempoteuse est placé sur une table, notamment une table à rouleaux. A retour du dispositif transporteur de la surface de culture, on décroche le support 6 vide et on accroche le support 6 qui vient d'être chargé. Deux tables distinctes superposées, côte à côte, ou de part et d'autre de la rempoteuse peuvent être utilisées pour faciliter les manoeuvres d'accrochage/décrochage.

Les moyens 14, 15, 16 d'association du support 6 au dispositif transporteur 10 comportent un palonnier d'accrochage 16 du support 6, ce palonnier d'accrochage 16 étant lui-même suspendu au châssis 11 du dispositif transporteur 10 par l'intermédiaire des moyens 17, 18 de réglage de la position du support 6 par rapport au châssis 11.

Les moyens 17, 18 de réglage de la position du support 6 par rapport au châssis 11 sont constitués d'une potence 18 d'orientation associée à un support de potence 22 lui-même associé rigidement solidaire du châssis 11, la potence 18 d'orientation étant associée à ce support de potence 22 de façon à pouvoir pivoter autour d'un axe vertical 23. Les moyens 17, 18 de réglage de la position du support 6 par rapport au châssis 11 sont constitués également d'une poutre de réglage de hauteur 17 s'étendant horizontalement suspendue et parallèle au bras horizontal 24 de la potence 18 d'orientation de façon réglable en hauteur, le palonnier d'accrochage 16 du support 6 étant lui-même suspendu à la poutre de réglage de hauteur 17. Le palonnier d'accrochage 16 du support 6 est suspendu à la poutre de réglage de hauteur 17 par des moyens 25, 26 permettant une variation de l'inclinaison de ce palonnier d'accrochage 16 par rapport à cette poutre de réglage 17, c'est-à-dire par rapport à l'horizontale. Ces moyens 25, 26 sont notamment constitués d'une part d'une articulation 25 du palonnier d'accrochage 16 en un point de la poutre 17 éloignée de son extrémité libre 27, et d'autre part d'un vérin 26 associé au moins sensiblement vertical à l'extrémité libre 27 de la poutre 17.

La poutre de réglage en hauteur 17 est elle-même associée à la potence d'orientation 18 d'une part par un évidement 45 d'axe vertical de l'extrémité de cette poutre 17 coopérant avec le bras vertical 29 de la potence 18, et d'autre part grâce à un câble 46 ancré en deux points 47, 48 à la poutre 17 et passant dans une série de poulies 49, 50, 51 solidaires de la potence 18 de telle façon que le câble 46 s'étend vers le bas à partir d'un point 47 d'ancrage sur la poutre 17, et s'étend vers le haut à partir du deuxième point 48 d'ancrage sur la poutre 17. Une telle disposition permet la suspension de la poutre 17 à la potence 18 avec un réglage de la hauteur et le maintien de la poutre 17 dans un plan sensiblement horizontal perpendiculaire au bras vertical 29 de la potence 18. Le câble 46 est ancré en 47 à l'extrémité 28 de la poutre 17 coopérant avec le bras vertical 29 de la potence 28, est rappelé vers le bas par une poulie 49 disposée en partie basse du bras vertical 29, puis est rappelé en partie haute de ce bras vertical 29 par une poulie 50 articulée au coin d'association du bras vertical 29 et du bras horizontal 24 de la potence 18, puis s'étend horizontalement jusqu'à l'extrémité libre 52 du bras horizontal 24 grâce à une poulie 51 disposée à cette extrémité 52, et enfin s'étend verticalement vers le bas jusqu'à son deuxième point d'ancrage 48 sur la poutre 17.

Un vérin 53 disposé au moins sensiblement verticalement et dont le corps 54 est solidaire du bras 24 horizontal de la potence 18, permet de faire varier la hauteur de la poutre 17. La tige d'actionnement 55 du vérin 53 peut être associée directement à la poutre 17, mais on préfère l'associer en 56 à la partie la plus basse du palonnier d'accrochage 16, et ce afin d'obtenir une course de débattement la plus importante possible, sans que le corps 54 de ce vérin 53 ne doive dépasser verticalement vers le haut de la potence 18. Dans ce cas, le corps 54 du vérin 53 est associé articulé au bras 24 de la potence 18 afin de ne pas gêner l'inclinaison du palonnier 16. Le câble 46 étant de longueur constante, il est facile d'observer que lorsque le vérin 53 est actionné, la poutre de réglage de hauteur 17 et le palonnier d'accrochage 16 qui lui est associé descendent ou montent, cette poutre 17 restant constamment horizontale. Un évidement vertical est ménagé dans la poutre 17 pour permettre le libre passage du vérin 53. Dans le mode de réalisation représenté, la poutre 17 est constituée de deux poutres 17a, 17b horizontales de même niveau parallèles et écartées l'une de l'autre d'une distance correspondant sensiblement à la largeur du bras vertical 29 de la potence 18.

L'articulation 25 du palonnier 16 sur la poutre 17 est disposée au voisinage de l'axe vertical du vérin 53, par exemple légèrement en avant de cet axe. Le vérin d'actionnement 26 permettant l'inclinaison du palonnier 16 par rapport à la poutre 17 est au contraire associé rigidement verticalement à l'extrémité libre 27 de cette poutre 17, son corps 57 faisant saillie vers le haut de la poutre 17 afin d'obtenir la course de débattement suffisante de la tige d'actionnement 58 de ce vérin 26. Par ailleurs, deux crochets de sécurité 59 solidaires de l'extrémité libre 27 de la poutre 17 s'étendent vers le bas pour former une butée limitant l'inclinaison du palonnier 16 par rapport à l'horizontale et la course de débattement du vérin 26 vers le bas.

Le support de potence 22 est constitué d'un mât vertical sensiblement de même hauteur que le bras vertical 29 de la potence 18. Une platine horizontale 60 s'étend à partir de l'extrémité libre 61 du mât vertical 22 pour former, à son extrémité libre 62, un point d'articulation supérieur de la potence 18. En partie basse, le bras vertical 29 de la potence 18 peut être directement articulé au châssis 11. La potence 18 comporte également un bras horizontal inférieur d'actionnement 64 s'étendant sensiblement horizontalement à partir de l'extrémité inférieure du bras vertical 29 de la potence 18. En agissant à l'extrémité libre du bras horizontal inférieur 64 on peut faire pivoter la potence 18 autour de l'axe vertical 23.

Sur la figure 3, le bras horizontal supérieur 24 de la potence 18 n'est pas représenté, et ce pour mieux faire apparaître les moyens permettant de faire pivoter la potence 18. Ces moyens sont constitués d'un bras rigide 65 articulé par une de ses extrémités au châssis 11 sensiblement sous l'axe 23 vertical de pivotement de la potence 18, et articulé à son autre extrémité au corps d'un vérin d'actionnement 66 dont la tige d'actionnement est associée à l'extrémité libre du bras horizontal inférieur d'actionnement 64 de la potence 18. Par ailleurs, la position du bras rigide 65 par rapport au châssis 11 est imposée et peut être réglée grâce à un vérin 67 s'étendant perpendiculairement à l'axe d'avancement 19 du dispositif transporteur 10, dont le corps est solidaire du châssis 11, et dont la tige d'actionnement est articulée en un point du bras rigide 65. Ce vérin 67 permet de placer le bras rigide 65 soit incliné vers la gauche soit incliné vers la droite, ce qui permet de faire pivoter la potence d'orientation 18 respectivement soit vers la droite, soit vers la gauche à partir de sa position normale dans laquelle elle est placée selon l'axe d'avancement 19 du dispositif transporteur 10.

On peut ainsi aisément faire pivoter la potence 18, et donc la poutre 17, le palonnier 16, et le support 6 dans un plan au moins sensiblement horizontal pour placer ce support 6 en regard d'une plate-bande 4 de stockage, puis faire varier la hauteur et l'inclinaison du support 6 par rapport à cette plate-bande de stockage 4 afin de procéder au déchargement dans les meilleures conditions.

Dans un procédé selon l'invention, on place le support 6 au-dessus et en regard de la plate-bande 4 de la surface de stockage 2 à une distance de cette plate-bande 4 au moins sensiblement constante le long du support 6, la plus faible possible pour permettre l'actionnement des moyens 7, 8, 34 de déchargement sans endommagement des pots 1, on actionne ces moyens 7, 8, 34 de déchargement afin de faire tomber les pots 1 sur la surface de stockage 2, et on replace le support 6 dans un plan au moins sensiblement horizontal et à une hauteur suffisante pour permettre de nouveau son pivotement et sa remise en place selon l'axe d'avancement 19 du dispositif transporteur 10, et ce sans interférence avec les pots 1 ni avec leur contenu. Ces différentes phases du procédé selon l'invention sont bien illustrées sur les figures 5, et 6a à 6c. Sur les figures 5 et 6a, on montre le support 6 placé le plus près possible de la plate-bande 4 de stockage, et parallèlement à cette plate-bande 4 de stockage. La figure 6b illustre le déchargement progressif des pots 1 par actionnement des moyens 7, 8, 34 de déchargement. Sur la figure 6c, le support 6 est remonté vers le haut jusqu'à ce qu'il n'interfère plus avec les pots 1 ou avec les plants qu'il contient et ce de façon à pouvoir être replacé selon l'axe 19 d'avancement du dispositif transporteur 10.

Le dispositif transporteur 10 comporte de chaque côté une béquille 20 de stabilisation et de positionnement. Cette béquille est escamotable et doit être déployée avant de faire pivoter la potence 18 et le support 6 perpendiculairement à l'axe d'avancement 19. Ainsi dans un procédé selon l'invention, on avance le dispositif transporteur 10 dans l'allée d'accès 3 jusqu'à ce que la béquille 20 vienne en regard d'un chemin d'accès 5 qui sert de repère entre deux plates-bandes 4 de stockage. On arrête alors le dispositif transporteur 10, et on déploie la béquille 20 dans le chemin 5 d'accès comme illustré en figure 3. On peut alors faire pivoter le support 6 sans risque de basculement du dispositif transporteur 10 sur le côté. L'escamotage et le déploiement des béquilles 20 stabilisation et de positionnement est effectué grâce à des vérins, ou simplement à la main. Un vérin 68 de blocage de la béquille 20 déployée, et de réglage de l'assiette du dispositif transporteur 10 peut être prévu. Dans ce cas, le fourreau 75 de chaque béquille 20 est articulée à un côté du châssis 11 par une extrémité 76 et le vérin 68 s'étend verticalement de l'autre côté entre le châssis 11 et l'autre extrémité 77 du fourreau 75 pour en régler l'inclinaison par rapport à l'horizontale.

Le palonnier d'accrochage 16 comporte d'une part au moins une saillie 14 pénétrant dans un chant extrême 33 du support 6, entre deux entretoises 39, et d'autre part deux bras coudés 69 symétriques l'un de l'autre par rapport à un plan vertical, coopérant via des dispositifs 15 d'accrochage rapide respectivement avec les deux chants latéraux 71 du support 6 en des points 72 de ces chants latéraux 71 éloignés du chant extrême 33 coopérant avec la saillie 14. Les dispositifs d'accrochage 15 peuvent être constitués de simples crochets articulés à l'extrémité libre inférieure de chacun des deux bras coudés 69, et coopérant avec le cadre supérieur 37 du support 6. Afin de permettre un meilleur équilibrage du support 6, on peut également prévoir plusieurs saillies 14, une disposée en regard de chacun des deux bras coudés 69. Par ailleurs, le châssis 11 comporte avantageusement des ergots latéraux de centrage facilitant la mise en place du support sur le châssis 11 selon l'axe d'avancement 19 du dispositif transporteur 10.

On comprend aisément qu'avec de tels dispositifs 14, 15 d'accrochage rapide, il suffit pour associer le support 6 au dispositif transporteur 10 de laisser dépasser de la table sur laquelle repose préalablement le support 6, une longueur suffisante de ce support 6 (correspondant sensiblement à la longueur du châssis 11 jusqu'à la saillie 14), puis d'avancer le dispositif transporteur jusqu'à ce que la saillie 14 coopère avec le chant extrême 33 du support 6. Il suffit alors d'abaisser le palonnier 16 suffisamment pour faire coopérer les crochets 15 avec les chants latéraux 71 du support 6. Lors du décrochage, la manoeuvre inverse est effectuée.

Le fonctionnement des moyens 21 d'actionnement des moyens 7, 8, 34 de déchargement est illustré sur les figures 6a à 6c. Ces moyens 21 d'actionnement peuvent être constitués d'un levier coudé 21a et d'un vérin d'actionnement 21b. Le levier 21a est associé au palonnier d'accrochage 16, et son extrémité libre 73 coopère avec la traverse de support 34 la plus extrême et la plus proche du chant extrême 33 du support 6. Le levier 21a est par ailleurs associé au vérin d'actionnement 21b. Le levier 21a est associé articulé par une de ses extrémités au palonnier d'accrochage 16 et est coudé deux fois. La tige d'actionnement du vérin 21b est associée articulée à l'un des codes de ce levier 21a.

L'ensemble des vérins 26, 53, 66, 67, 68, 21b est alimenté en énergie hydraulique et/ou hydro-pneumatique par le dispositif tracteur via des moyens de commande 74 centralisés à vannes disposés à l'avant du dispositif transporteur 10.

L'invention permet avec un dispositif transporteur 10 de grande simplicité et de faible coût de transporter simultanément un très grand nombre de pots avec un support de grande longueur. Une seule personne peut ainsi remplir quasiment instantanément une plate-bande complète 4 de stockage.

L'espacement $E_1$ entre deux traverses de maintien 31 est adapté en fonction de la dimension de pots 1. On peut prévoir une valeur de $E_1$ pour deux dimensions de pots 1. Les essais réalisés ont montré qu'il est possible de remplir immédiatement des plates-bandes 4 de stockage dont les dimensions sont de l'ordre de 7 m sur 1,5 m avec des pots 1 de 1 litre à 5 litres.

Pour les pots de 1,3 litres et 2 litres, on peut prévoir $E_1 \approx 147$ mm, $e_1 \approx 70$ mm, $e_2 \approx 60$ mm, $d_2 \approx 216$ mm, et on forme ainsi trente rangées 32 de pots 1 pour une longueur du support 6 de l'ordre de 6780 mm et une largeur de l'ordre de 1460 mm. Pour des pots de 3 litres et 5 litres, on peut prévoir $E_1 \approx 180$ mm, $e_1 \approx 60$ mm, $d_2 \approx 259$ mm, et on forme ainsi vingt-cinq rangées 32 de pots 1 pour une longueur du support 6 de l'ordre de 6760 mm et une largeur de 1460 mm.

En variante, on peut prévoir un espacement $E_1$ entre deux traverses de maintien 31 correspondant aux pots les plus grands, et une traverse de calage (non représentée) associée rigidement mais de façon réglable à et parallèlement à chaque traverse de maintien 31 pour adapter la largeur entre cette traverse de calage et la traverse de maintien 31 opposée en fonction de la taille des pots. Cette traverse de calage peut être réalisée par une simple plaque verticale associée à la traverse de maintien 31 par des équerres supérieures comportant des ergots s'étendant vers le bas et qui viennent coopérer avec des perçages de la partie supérieure de la traverse de maintien 31. Une telle traverse de calage a également comme avantage d'éviter le renversement des pots au déchargement et d'assurer un déchargement vertical.

La hauteur totale du dispositif transporteur 10, c'est-à-dire la hauteur entre le sol et l'extrémité libre 61 du mât 22 de support de potence, est de l'ordre de 2500 mm. La longueur de la poutre 17 de réglage en hauteur est de l'ordre de 2750 mm. La longueur du palonnier 16 est de l'ordre de 3000 mm. Le point 25 d'articulation du palonnier 16 à la poutre 17 est distant de l'extrémité libre 27 de cette poutre 17 d'environ 1600 mm.

Lorsque l'on utilise l'invention pour transporter les pots 1 à partir de la surface de culture vers une surface de préparation de commandes, on place le support 6 au-dessus d'une plate-bande 4 jouxtant la plate-bande 4 de laquelle on prend les pots 1, à une hauteur suffisante pour ne pas endommager les plants de cette plate-bande 4. On peut charger le support 6 en pots 1 d'une façon très rapide et simple, manuellement, car la distance à faire effectuer à chaque pot est faible.

**Revendications**

1. Procédé pour transporter simultanément un grand nombre de pots (1) et les mettre en place sans autre manutention individuelle sur une surface (2) de stockage dans lequel on dispose les pots (1) sur un support transportable (6) s'étendant horizontalement et comportant des moyens (7, 8, 34) de déchargement groupé des pots verticalement vers le bas, puis on transporte et on place le support (6) au-dessus et en regard d'une plate-bande (4) de la surface de stockage (2) de sorte que chaque pot (1) est ainsi situé à la verticale de l'endroit où il doit être stocké, puis on décharge les pots (1) du support (6) en actionnant les moyens (7, 8, 34) de déchargement, ce qui a pour effet de faire tomber verticalement les pots (1) sur la surface de stockage (2), caractérisé en ce que l'on utilise un support (6) dont les dimensions correspondent à celles de la plate-bande (4) de la surface de stockage (2), en ce que l'on transporte le support (6) vers la surface de stockage (2) grâce à un dispositif transporteur (10), le support (6) étant disposé pour s'étendre en longueur selon l'axe d'avancement (19) du dispositif transporteur (10), en ce que l'on avance le dispositif transporteur (10) dans une allée (3) de la surface de stockage (2) en regard d'une plate-bande (4) de cette surface (2) qui s'étend perpendiculairement à l'allée (3), et en ce que l'on place le support (6) au-dessus, et en regard de cette plate-bande (4) en le faisant pivoter de 90° environ dans un plan au moins sensiblement horizontal par rapport au dispositif transporteur (10) en vue de placer le support (6) au-dessus et en regard de la plate-bande (4) pour décharger les pots (1).

2. Procédé selon la revendication 1, caractérisé en ce que l'on décharge les pots (1) du support (6) progressivement en actionnant les moyens (7, 8, 34) de déchargement en commençant par les pots (1) disposés au voisinage d'un côté extrême (33) du support (6) et en terminant par les pots (1) disposés au voisinage du côté extrême opposé (35).

3. Procédé selon la revendication 2, caractérisé en ce que l'on commence par décharger les pots (1) disposés au voisinage du côté (33) du support (6) le plus proche du dispositif transporteur (10) et en ce que l'on termine par ceux disposés au voisinage du côté opposé (35) éloigné du dispositif transporteur (10).

4. Procédé selon l'une quelconque des revendications 1 à 3, caractérisé en ce que le support (6) étant rectangulaire, on dispose les pots (1) sur le support rectangulaire (6) en rangées (32) parallèles aux petits côtés (33, 35) du support (6), et en ce que l'on décharge les pots (1) rangée par rangée.

5. Procédé selon l'une quelconque des revendications 1 à 4, caractérisé en ce que l'on place le support (6) au-dessus, et en regard de la plate-bande (4) de la surface de stockage (2) à une distance de cette plate-bande (4) au moins sensiblement constante le long du support (6) mais la plus faible possible pour permettre l'actionnement des moyens (7, 8, 34) de déchargement sans endommagement des pots (1) lors du déchargement, on actionne ces moyens (7, 8, 34) de déchargement afin de faire tomber les pots (1) sur la surface de stockage (2), et on replace le support

(6) dans un plan au moins sensiblement horizontal et à une hauteur suffisante pour permettre la remise en place du support vide (6) selon l'axe d'avancement (19) du dispositif transporteur (10) sans interférence avec les pots (1) ni avec leur contenu.

6. Support (6) permettant de transporter simultanément un grand nombre de pots (1) et de les mettre en place sans autre manutention individuelle sur une surface (2) de stockage, du type comportant un châssis rectangulaire (30) et des moyens (31) de maintien des pots (1) en place, des moyens (7, 8, 34) de déchargement groupé verticalement vers le bas permettant de faire tomber les pots (1) verticalement par groupes sur la surface de stockage (2) sans manutention individuelle de ces pots (1), les différents moyens (7, 8, 34) de déchargement groupé des différents pots (1) étant liés mécaniquement entre eux de façon à pouvoir être actionnés par un dispositif (21) commun d'actionnement, les moyens (31) de maintien des pots (1) permettant leur rangement en rangées (32), caractérisé en ce qu'il comporte un fond (8) plan comportant des évidements (7) formant trappes de passage des pots (1) et constituant les moyens (7) de déchargement groupé, le fond (8) étant associé au châssis (30) de façon à pouvoir coulisser par rapport à ce châssis (30) dans une direction parallèle à son plan et à celui du châssis (30), notamment longitudinalement, entre deux positions : une position normale pour laquelle les évidements (7) ne viennent pas en regard des pots (1) qui reposent sur le fond (8), et une position de déchargement dans laquelle les évidements (7) sont en regard des pots (1) et permettent leur chute verticale à travers ces évidements (7), en ce qu'il comporte des traverses fixes de maintien (31) associées rigidement au châssis rectangulaire (30) parallèlement à un côté (33) du châssis (30) et à distance les unes des autres de sorte que les pots (1) peuvent être disposés en rangées (32) entre ces traverses (31), en ce que le fond (8) est constitué de traverses de support (34) des pots (1) parallèles entre elles et aux traverses fixes de maintien (31), les traverses de support (34) étant écartées horizontalement les unes des autres de façon à former entre elles les évidements (7) permettant le passage des rangées (32) de pots (1) en position de déchargement, lorsque les évidements (7) sont mis en regard des pots (1) par translation horizontale du fond (8) perpendiculairement aux traverses fixes de maintien (31), et en ce que, en position normale du fond (8) pour laquelle les pots (1) reposent sur les traverses de support (34), la distance $d_3$ séparant chaque traverse de support (34) de la traverse fixe de maintien (31) sous laquelle elle vient coulisser en position de déchargement est différente d'une traverse de support (34) à l'autre et varie progressivement d'un côté (33) à l'autre (35) du châssis (30) de sorte qu'au cours du coulissement du fond (8) de la position normale à la position de déchargement, les évidements (7) viennent en regard des pots (1) progressivement d'un côté (33) à l'autre (35) du châssis (30), les moyens (7, 8, 34) de déchargement étant agencés pour permettre un déchargement groupe mais progressif des pots (1), rangée par rangée, en fonction de la course de déplacement du dispositif (21) commun d'actionnement.

7. Support selon la revendication 6, caractérisé en ce que les traverses fixes de maintien (31) et mobiles de support (34), et donc les rangées (32) de pots (1) sont parallèles aux petits côtés (33, 35) du châssis (30) rectangulaire du support (6).

8. Support selon l'une quelconque des revendications 6 et 7, caractérisé en ce qu'il comporte des moyens (36) de rappel du fond (8) en position normale pour laquelle chaque traverse de support (34) peut supporter une rangée (32) de pots (1).

9. Dispositif transporteur d'un support selon l'une quelconque des revendications 6 à 8, comportant un châssis (11) supportant au moins un essieu (12) à roues (13), des moyens (14, 15, 16) d'accrochage rapide et amovible du support (6) au dispositif transporteur (10), des moyens (17, 18) de réglage de la position du support (6) par rapport au châssis (11), et des moyens de commande et (21) d'actionnement des moyens (7) de déchargement groupé des pots (1) du support (6), caractérisé en ce que les moyens (14, 15, 16) d'accrochage rapide et amovible du support (6) au dispositif transporteur (10) comportent un palonnier d'accrochage (16) de support (6), ce palonnier (16) étant lui-même suspendu au châssis (11) par l'intermédiaire des moyens (17, 18) de réglage de la position du support (6) par rapport au châssis (11), en ce que les moyens (17, 18) de réglage de la position du support (6) par rapport au châssis (11) sont constitués d'une potence (18) d'orientation associée à un support de potence (22) du châssis (11) de façon à pouvoir pivoter autour d'un axe vertical (23), et d'une poutre de réglage de hauteur (17) s'étendant horizontalement suspendue et parallèle au bras horizontal (24) de la potence (18) d'orientation de façon réglable en hauteur, le palonnier d'accrochage (16) du support (6) étant lui-même suspendu à la poutre de réglage de hauteur (17), et en ce que les moyens (17, 18) de réglage de la position du support (6) par rapport au châssis (11) permettent un pivotement du support (6) d'une position dans laquelle il s'étend en longueur selon l'axe d'avancement (19) du dispositif transporteur (10), à une position dans laquelle le support (6) est sensiblement perpendiculaire à l'axe d'avancement (19) du dispositif transporteur (10).

10. Dispositif selon la revendication 9, caractérisé en ce que le palonnier d'accrochage (16) du support (6) est suspendu à la poutre de réglage de hauteur (17) par des moyens (25, 26) permettant une variation de l'inclinaison de ce palonnier d'accrochage (16) par rapport à cette poutre de réglage de hauteur (17) —notamment d'une part une articulation (25) en un point de la poutre (17) éloigné de son extrémité libre (27), et d'autre part un vérin vertical (26) associé à l'extrémité libre (27) de la poutre (17).

11. Dispositif selon l'une quelconque des revendications 9 et 10, caractérisé en ce que le palonnier d'accrochage (16) comporte d'une part une saillie (14) pénétrant dans un chant extrême (33) du support (6) et d'autre part deux bras coudés (69), symétriques l'un de l'autre par rapport à un plan vertical, coopérant via des dispositifs d'accrochage (15) respectivement avec les deux chants latéraux (71) du support (6) en des points (72) de ces chants latéraux (71) éloignés du chant extrême (33) coopérant avec la saillie (14).

12. Dispositif selon l'une quelconque des revendications 9 à 11, caractérisé en ce que les moyens (21) d'actionnement des moyens (7) de déchargement groupé des pots (1) du support (6) sont constitués d'un levier (21a) associé au palonnier d'accrochage (16) et dont l'extrémité libre (73) coopère avec la traverse de support (34) extrême la plus proche du chant extrême (33) du support (6) tandis que le levier (21a) est par ailleurs associé à un vérin d'actionnement (21b).

**Patentansprüche**

1. Verfahren zum gleichzeitigen Befördern einer großen Zahl Töpfe (1) und zu deren Absetzen auf einer Abstellfläche (2) ohne manuelle Eingriffe, bei dem die Töpfe (1) auf eine transportierbare waagrechte Unterlage (6) gestellt werden, die mit Entladevorrichtungen (7, 8, 34) zum gruppenweisen Absetzen der Töpfe senkrecht nach unten versehen ist, wobei die Unterlage (6) über ein Beet (4) der Abstellfläche (2) vorgefahren wird, bis sich jeder Topf (1) senkrecht über der Stelle befindet, an der er abgestellt werden soll, und wobei anschließend die Töpfe (1) durch Betätigung von Entladevorrichtungen (7, 8, 34) senkrecht auf die Abstellfläche (2) fallen gelassen werden, **dadurch gekennzeichnet**, daß eine Unterlage (6) verwendet wird, deren Abmessungen mit denen des Beetes (4) der Abstellfläche (2) übereinstimmen, daß die Unterlage (6) mit Hilfe einer Transportvorrichtung (10) bis zur Abstellfläche (2) befördert wird und sich in Fahrtrichtung (19) der Transportvorrichtung (10) ausfahren läßt, daß die Transportvorrichtung (10) auf einem Weg (3) der Abstellfläche (2) an einem senkrecht zu diesem Weg (3) verlaufenden Beet (4) entlanggefahren wird und daß die Unterlage (6) durch eine Drehung um ca. 90° in weitgehend waagrechter Richtung gegenüber der Transportvorrichtung (10) über dieses Beet (4) gestellt wird, um die Töpfe (1) auf dem Beet (4) abzusetzen.

2. Verfahren nach Patentanspruch 1, dadurch gekennzeichnet, daß die Töpfe (1) nach und nach unter Betätigung der Entladevorrichtungen (7, 8, 34) von der Unterlage (6) entladen werden, wobei zuerst die Töpfe neben einem der Ränder (33) der Unterlage (6) und zuletzt die Töpfe (1) neben dem gegenüberliegenden Randes (35) abgesetzt werden.

3. Verfahren nach Patentanspruch 2, dadurch gekennzeichnet, daß zuerst die Töpfe neben der der Transportvorrichtung (10) am nächsten gelegenen Seite (33) der Unterlage (6) und zuletzt die Töpfe (1) neben der gegenüberliegenden, d.h. von der Transportvorrichtung (10) am weitesten entfernten Seite (35) abgesetzt werden.

4. Verfahren nach einem beliebigen der Patentansprüche 1 bis 3, dadurch gekennzeichnet, daß bei Verwendung einer rechteckigen Unterlage (6) die Töpfe (1) in Reihen (32) parallel zur Schmalseite (33, 35) der rechteckigen Unterlage (6) aufgestellt und reihenweise abgeladen werden.

5. Verfahren nach einem beliebigen der Patentansprüche 1 bis 4, dadurch gekennzeichnet, daß die Unterlage (6) in einer bestimmten Höhe über dem Beet (4) der Abstellfläche (2) entlangbewegt wird, wobei der Abstand zwischen Beet und Unterlage über die Länge der Unterlage (6) hin weitgehend gleich, aber so gering wie möglich ist, um beim Betätigung der Entladevorrichtungen (7, 8, 34), die Töpfe (1) nicht zu beschädigen, die hierbei von der Unterlage (6) auf die Abstellfläche (2) fallen gelassen werden, wonach die leere Unterlage (6) in weitgehend waagrechter Richtung und ausreichender Höhe in Fahrtrichtung der Transportvorrichtung (10) und ohne mit den Töpfen (1) und deren Inhalt in Berührung zu kommen wieder zurückgefahren wird.

6. Unterlage (6) zur gleichzeitigen Beförderung einer großen Zahl Töpfe (1) und zu deren Absetzen auf einer Abstellfläche (2) ohne manuelle Eingriffe, wobei die Unterlage (6) einen rechteckigen Rahmen (30) und Mittel (31) zum Festhalten der Töpfe (1) sowie Entladevorrichtungen (7, 8, 34) zum gruppenweisen Entladen der mechanisch untereinander verbundenen Töpfe (1) besitzt und die Töpfe über eine gemeinsame Betätigungsvorrichtung (21) entladen werden können, wobei durch die Mittel (31) zum Festhalten der Töpfe (1) deren Aufstellung in Reihen (32) erfolgen kann, dadurch gekennzeichnet, daß die Unterlage (6) einen flachen Boden (8) mit Aussparungen (7) besitzt, die zum Durchfallen der Töpfe bei deren gruppenweisem Entladen ausgelegt sind, wobei der Boden (8) so mit dem Rahmen (30) verbunden ist, daß er parallel zu der von ihm und dem Rahmen gebildeten Ebene insbesondere in Längsrichtung zwischen zwei Stellungen verfahren werden kann, nämlich zwischen einer Normalstellung, bei der die Aussparungen (7) nicht den auf dem Boden (8) stehenden Töpfen (1) gegenüberliegen, und einer Entladestellung, bei der die Aussparungen (7) den Töpfen (1) gegenüberliegen und somit deren senkrechtes Durchfallen bewirken, weiterhin dadurch, daß die Unterlage (6) feste Haltestreben (31) besitzt, die steif mit dem rechteckigen Rahmen (30) und parallel zu einer Seite (33) des Rahmens (30) und in einem solchen Abstand zueinander angebracht sind, daß die Töpfe in Reihen (32) zwischen den Haltestreben (31) aufgestellt werden können, sowie dadurch, daß der Boden (8) aus Tragholmen (34) für die Töpfe (1) besteht, die parallel zueinander und zu den festen Haltestreben (31) verlaufen und deren waagrechte Abstände voneinander so berechnet sind, daß sie die Aussparungen (7) bilden, die beim Entladen der Töpfe zu deren Durchfallen in Reihen (32) erforderlich sind und die entstehen, sobald der Boden senkrecht zu den festen Haltestreben (31) verfahren wird, weiterhin dadurch, daß bei Normalstellung des Bodens (8), bei der die Töpfe auf den Tragholmen (34) stehen, der Abstand d zwischen jedem einzelnen Tragholm (34) und der Haltestrebe (31), mit der sie in Entladestellung zusammenwirkt, von einem Tragholm zum anderen unterschiedlich ist und sich von einer Seite (33) zur anderen (35) des Rahmens (30) gleichmäßig ändert, sodaß beim Verfahren des Bodens (8) von der Normalstellung in die Entladestellung die Aussparungen (7) im Boden nacheinander von einer Seite (33) zur anderen (35) des Rahmens (30) unter den Töpfen (1) entstehen, wobei die Entladevorrichtungen (7, 8, 34) so betätigt werden, daß die Töpfe (1) zwar gruppenweise, aber nacheinander, d.h. Reihe um Reihe entsprechend dem Hub der gemeinsamen Betätigungsvorrichtung (21) entladen werden.

7. Unterlage nach Patentanspruch 6, dadurch gekennzeichnet, daß die festen Haltestreben (31) und die beweglichen Tragholme (34) und somit die Reihen (32) der Töpfe (1) parallel zu den Schmalseiten (33, 35) des rechteckigen Rahmens (30) der Unterlage (6) verlaufen.

8. Unterlage nach einem beliebigen der Patentansprüche 6 und 7, dadurch gekennzeichnet, daß sie Mittel (36) zum Zurückfahren des Bodens (8) in die Normalstellung besitzt, in der jeder Tragholm (34) eine Reihe (32) von Töpfen (1) tragen kann.

9. Transportvorrichtung für eine Unterlage nach einem beliebigen der Patentansprüche 6 bis 8 mit einem Rahmen (11), der mindestens eine Achse (12) mit Rädern (13) und abnehmbare Mittel (14, 15, 16) zum schnellen Einhängen der Unterlage (6) auf der Transportvorrichtung (10), Mittel (17, 18) zur Einstellung der Unterlage (6) gegenüber dem Rahmen (11) und Mittel (21) zur Steuerung und Betätigung der Entladevorrichtungen (7) der Unterlage (6) zum gruppenweisen Entladen der Töpfe (1) besitzt, dadurch gekennzeichnet, daß die abnehmbaren Mittel (14, 15, 16) zum schnellen Einhängen der Unterlage (6) auf der Transportvorrichtung (10) ein Einhänggestänge (16) für die Unterlage (6) besitzt, daß wiederum über Mittel (17, 18) zur Einstellung der Unterlage (6) gegenüber dem Rahmen (11) an diesem befestigt ist, sowie dadurch, daß die Mittel (17, 18) zur Einstellung der Unterlage (6) gegenüber dem Rahmen (11) aus einem um seine senkrechte Achse (23) drehbaren Ausleger (18) und einer Auslegerhalterung (22) des Rahmens (11) und einem parallel zum waagrechten Arm (24) des Auslegers (18) verlaufenden, der Höhe nach verstellbaren Träger (17) zur Höheneinstellung bestehen, wobei das Einhänggestänge (16) für die Unterlage (6) an dem Träger (17) zur Höheneinstellung aufgehängt ist, und dadurch, daß die Mittel (17, 18) zur Einstellung der Unterlage (6) gegenüber dem Rahmen (11) ein seitliches Schwenken der Unterlage (6) aus einer Stellung, in der ihre Längsachse in Fahrtrichtung (19) der Transportvorrichtung (10) liegt, in eine Stellung, in der ihre Längsachse weitgehend senkrecht zur Fahrtrichtung (19) der Transportvorrichtung (10) liegt, ermöglichen.

10. Vorrichtung nach Patentanspruch 9, dadurch gekennzeichnet, daß das Einhänggestänge (16) für die Unterlage (6) mit Mitteln (25, 26) am Träger (17) zur Höheneinstellung befestigt ist, durch die sich der Neigungswinkel des Einhänggestänges (16) gegenüber dem Träger (17) verstellen läßt, insbesondere mit einem Gelenk (25) an einem Punkt des Trägers (17), der weit von dessen freiem Ende (27) entfernt ist, und mit einem senkrechten Druckzylinder (26), der mit dem freien Ende (27) des Trägers (17) verbunden ist.

11. Vorrichtung nach einem beliebigen der Patentansprüche 9 und 10, dadurch gekennzeichnet, daß das Einhänggestänge einerseits einen Vorsprung (14), der in eine Endkante (33) der Unterlage (6) eingreift, und andererseits zwei gegenüber der Senkrechten symmetrisch zueinander verlaufende Winkel (69) besitzt, die über die Einhängvorrichtungen (15) jeweils mit den beiden Seitenkanten (71) der Unterlage (6) an den Punkten (72) der Seitenkanten (71) zusammenwirken, die weit von der Endkante (33) entfernt sind, die mit dem Vorsprung (14) zusammenwirken.

12. Vorrichtung nach einem beliebigen der Patentansprüche 9 bis 11, dadurch gekennzeichnet, daß die Betätigungsvorrichtung (21) für die Entladevorrichtungen (7) zum gruppenweisen Entladen der Töpfe aus der Unterlage (6) aus einem Hebel (21a) besteht, der mit dem Einhänggestänge (16) verbunden ist, dessen freies Ende (73) mit dem der Endkante (33) der Unterlage (6) am nächsten gelegenen Tragholm (34) zusammenwirkt, während der Hebel (21a) wiederum über einen Druckzylinder (21b) betätigt wird.

**Claims**

1. A method of transporting a large number of pots (1) simultaneously and placing them without additional individual handling on a storage surface (2), wherein the pots (1) are disposed on a transportable support (6) extending horizontally and including unloading means (7, 8, 34) for unloading groups of pots vertically downwards, the support (6) then being transported and placed over a border (4) of the storage surface (2) such that each pot (1) is thus situated vertically above the location where it is to be stored, after which the pots (1) are unloaded from the support by actuating the unloading means (7, 8, 34), which has the effect of causing the pots (1) to drop vertically onto the storage surface (2), the method being characterized in that a support (6) is used whose dimensions correspond to the dimensions of the border (4) of the storage surface (2), in that the support (6) is transported to the storage surface (4) by means of a transporter device (10), the support (6) being disposed to extend lengthwise along the advance axis (19) of the transporter device (10), in that the transporter device (10) is advanced along a path (3) of the storage surface (2) facing a border (4) of said surface (2) which extends perpendicularly to the path (3), and in that the support (6) is placed over said border (4) by causing it to pivot through about 90° relative to the transporter device (10) in a plane that is at least substantially horizontal in order to place the support (6) over the border (4) to unload the pots (1).

2. A method according to claim 1, characterized in that the pots (1) are unloaded progressively from the support (6) by actuating the unloading means (7, 8, 34) beginning with the pots (1) disposed in the vicinity of one end (33) of the support (6) and terminating with the pots (1) disposed in the vicinity of the opposite end (35) thereof.

3. A method according to claim 2, characterized in that it begins by unloading the pots (1) disposed in the vicinity of the end (33) of the support (6) which is closest to the transporter device (10) and in that it terminates with the pot disposed in the vicinity of the opposite end (35) that is distant from the transporter device (10).

4. A method according to any one of claims 1 to 3, characterized in that the support (6) is rectangular, and the pots (1) are disposed on the rectangular support (6) in rows (32) that are parallel to the short sides (33, 35) of the support (8), and in that the pots (1) are unloaded row by row.

5. A method according to any one of claims 1 to 4, characterized in that the support (6) is placed over the border (4) of the storage surface (2) at a height above said border (4) which is at least substantially constant along the support (6) but which is as low as possible so as to enable the unloading means (7, 8, 34) to be actuated without damaging the pots (1) during unloading, the unloading means (7, 8, 34) being actuated to cause the pots (1) to drop onto the storage surface (2), and the support (6) being returned in a plane that is at least substantially horizontal to a height that is sufficient to enable the empty support (6) to be put back into place along the advance axis (19) of the transporter device (10) without interfering with the pots (1) or with the contents thereof.

6. A support (6) enabling a large number of pots (1) to be transported simultaneously and enabling them to be installed on a storage surface (2) without additional individual handling, the support being of the type comprising a rectangular frame (30) and means (31) for holding the pots (1) in place, unloading means (7, 8, 34) for unloading a group of pots vertically downwards enabling the pots (1) to drop vertically in groups onto the storage surface (2) without the pots (1) being handled individually, the various means (7, 8, 34) for unloading groups of various different pots (1) being mechanically interlinked so as to enable them to be actuated by a common actuator device (21), the means (31) for holding the pots (1) enabling them to be stored in rows (32), the support being characterized in that it includes a plane floor (8) including openings (7) forming port-passing trap doors and constituting the means (7) for unloading groups, the floor (8) being associated with the frame (30) in such a manner as to be capable of sliding relative to the frame (30) in a direction parallel to its own plane and to the plane of the frame (30), in particular longitudinally, between two positions : a normal position in which the openings (7) do not underlie the pots (1) which stand on the floor (8) and an unloading position in which the openings (7) do underlie the pots (1) and enable them to drop vertically through said openings (7), in that it includes fixed holding cross-members (31) associated rigidly with the rectangular frame (30) parallel to an end (33) of the frame (30) and spaced apart from one another so that the pots (1) can be disposed in rows (32) between the holding cross-members (31), in that the floor (8) is constituted by supporting cross-members (34) for supporting the pots (1) parallel to one another and to the fixed holding cross-members (31), the supporting cross-members (34) being spaced apart horizontally from one another so as to form therebetween the openings (7) that enable rows (32) of pots (1) to pass in the unloading position when the openings (7) are caused to underlie the pots (1) by moving the floor (8) in horizontal translation perpendicularly to the fixing holding cross-members (31), and in that, in the normal position of the floor (8) in which the pots (1) stand on the supporting cross-members (34), the distance $d$ between each supporting cross-member (34) and the fixed holding cross-member (31) beneath which it then slides in the unloading position is different from one supporting cross-member (34) to another and varies progressively from one end (33) of the frame (30) to the other end (35) such that during sliding of the floor (8) from the normal position to the unloading position, the openings (7) come level with the pots (1) progressively from one end (33) of the frame (30) to the other end (35) thereof, with the unloading means (7, 8, 34) being arranged to enable the pots (1) to be unloaded in groups but progressively, row by row, as a function of the displacement of the common actuator device (21).

7. A support according to claim 6, characterized in that the fixed holding cross-members (31) and the moving support cross-members (34) and thus the rows (32) of pots (1) are parallel to the short sides (33, 35) of the rectangular frame (30) of the support (6).

8. A support according to claim 6 or 7, characterized in that it includes return means (36) for returning the floor (8) to its normal position in which each supporting cross-member (34) is in a position to support a row (32) of pots (1).

9. A transporter device according to any one of claims 6 to 8, comprising a chassis (11) supporting at least one axle (12) having wheels (13), coupling means (14, 15, 16) for rapidly and removably coupling the support (6) to the transporter device (10), position adjusting means (17, 18) for adjusting the position of the support (6) relative to the chassis (11), and control and actuator means (21) for coupling and actuating the unloading means (7) to unloading groups of the pots (1) from the support (6), the transporter device being characterized in that the coupling means (14, 15, 16) for rapidly and removably coupling the support (6) to the transporter device (10) comprise a spreader (16) for coupling to the support (6), the spreader (16) being itself suspended from the chassis (11) by the position adjusting means (17, 18) for adjusting the position of the support (6) relative to the chassis (11), in that the position adjusting means (17, 18) for adjusting the position of the support (6) relative to the chassis (11) are constituted by a bracket jib (18) associated with a jib support (22) on the chassis (11) to enable it to pivot about a vertical axis (23), and by a beam (17) that is adjustable in height that is suspended horizontally and parallel to the horizontal arm of the jib (18) in a manner that is adjustable in height, the spreader (16) for coupling to the support (6) being itself suspended from the height-adjusting beam (17), and in that the means (17, 18) for adjusting the position of the support (6) relative to the chassis (11) enable the support (6) to pivot from a position in which it extends lengthwise along the advance axis (19) of the transporter device (10) to a position in which the support (6) is substantially perpendicular to the advance axis (19) of the transporter device (10).

10. A device according to claim 9, characterized in that the spreader (16) for coupling to the support (6) is suspended from the height-adjusting beam (17) by means (25, 26) enabling the slope of the spreader (16) to be varied relative to the height-adjusting beam (17), and in particular firstly a hinge (25) at point on the beam (17) which is distant from its free end (27), and secondly a vertical actuator (26) associated with the free end (27) of the beam (17).

11. A device according to claim 9 or 10, characterized in that the spreader (16) comprises firstly a projection (14) penetrating into an end edge (33) of the support (6) and secondly two angled arms (69) disposed symmetrically to each other about a vertical plane and co-operating via hooking devices (15) with respective ones of the two side edges (71) of the support (6) at points (72) on the side edges (71) that are distant from the end edge (33) co-operating with the projection (14).

12. A device according to any one of claims 9 to 11, characterized in that the means (21) for actuating the unloading means (7) for unloading groups of the pots (1) from the support (6) are constituted by a lever (21a) associated with the spreader (16) and having its free end (73) cooperating with the end supporting cross-member (34) closest to the end edge (33) of the support (6), with the lever (21a) also being associated with an actuator (21b).

FIG. 1

EP 0 304 364 B1

FIG. 2

EP 0 304 364 B1

# FIG. 3

FIG.4

## FIG. 5

EP 0 304 364 B1

FIG. 6a

FIG. 6b

FIG. 6c

EP 0 304 364 B1

...

## FIG. 7

## FIG. 8